# EUROPEAN PATENT APPLICATION

(11) **EP 4 393 577 A1**
(43) Date of publication of application: **03.07.2024**
(21) Application number: 23216638.9
(22) Date of filing: 14.12.2023
(51) Int. Cl.: B01J 2/12, B01J 8/10, B01J 19/28

(54) **DIAPHRAGM APPARATUS FOR REGULATING A FLOW OF GRANULAR MATERIAL AND GRANULATING MACHINE**

(30) Priority: 30.12.2022 IT 202200027267
(71) Applicant: L.B. Officine Meccaniche S.p.A., 41042 Fiorano Modenese (Modena) (IT)
(72) Inventor: CAVANI, Giuseppe, 41043 Formigine, Modena (IT); FANTI, Corrado, 42123 Reggio Emilia (IT)
(74) Representative: Luppi Intellectual Property S.r.l.

(57) **Abstract**

A diaphragm apparatus is configured to be positioned at an open end of a rotatable drum (18) with a horizontal axis (A) of a granulating machine (19); the diaphragm apparatus (1) is fixed, in use, with respect to a rotation of the rotatable drum (18), and it is suitable for bounding the open end and regulate a flow of granular material exiting from the granulating machine (19); the diaphragm apparatus (1) comprises a wall (2) having a substantially circular plan shape on which there is obtained an opening (3) and intended to discharge the granular material from the granulating machine (19); the diaphragm apparatus (1) further comprises a closing element (6) configured to slide on the wall (2) between a closed position (PC), in which one end (7) of the closing element (6) is closer to a first edge (4) of the opening (3), and an open position (PA) in which the end (7) is closer to a second edge (5) of the opening (3), so as to adjust an area of the opening (3) for the discharge of the granular material.

## Description

The invention relates to a diaphragm apparatus configured to regulate a flow of granular material exiting from a granulating machine and a granulating machine for producing granules by agglomeration comprising the diaphragm apparatus.

Granulation of powdered materials is widely used in various industrial sectors such as for example the ceramic industry, the agrochemical industry and the pet-food industry. Thanks to the agglomeration of powdered materials, such process allows to obtain granules provided, for example, with the high flowability required for the work processes or for the use of the finished product.

For the production of granular material, control of the process parameters and in particular the granulation time is of fundamental importance. As a matter of fact, by varying the granulation time it is possible to control the size and quality of the granules exiting from a granulating machine.

Granulating machines provided with an apparatus for dispensing in output the granular material comprising a zig-zag-shaped passage chamber connected with a first end to an agglomeration chamber and comprising at a second end an outlet opening, are known. The passage chamber rotates integrally joined with the agglomeration chamber and, given the shape of the passage chamber, the material advances in the latter and it is dispensed through the outlet opening.

However, apparatuses for dispensing granular material of the type described above reveal some drawbacks known to the person skilled in the art.

One of the disadvantages lies in the fact that it is impossible to effectively control the granulation time in order to control the particle size distribution and moisture content of the agglomerates exiting from the machine. As a matter of fact, in granulating machines of the known type, it is difficult to change the granulation time, on which the particle size, moisture and, in general, the quality of the granular material produced depends.

One of the drawbacks of the apparatuses of the known type lies in the ease of material accumulation on the surfaces of the passage chamber. As a matter of fact, during granulation, the powders to be treated are wetted with a wet mixture, the material obtained easily adheres to the surfaces of the passage chamber due to its zig-zag shape. The amount of accumulating material increases rapidly, the material passage section in the passage chamber decreases, and the material output flow rate changes in an unwanted manner, requiring frequent cleaning and maintenance operations, resulting in machine downtime and increased costs.

A further drawback of the apparatuses of the known type lies in the large overall dimensions occupied by them. As a matter of fact, the large volume occupied by known apparatuses makes transportation and installation operations difficult, further reducing the useful space within a production plant, for example for the installation of other machines.

Therefore, it is desirable to make an apparatus for dispensing granular material which allows to effectively control the granulation time, reducing production costs, plant downtime and overall dimensions.

An object of the invention is to improve the prior art apparatuses for dispensing granular material.

A further object is to provide an apparatus for dispensing granular material which allows to easily and effectively adjust the granulation time so as to control the particle size distribution and moisture content of the granular material exiting from the granulating machine.

Still, a further object is to provide an apparatus for dispensing granular material shaped so as to reduce cleaning and maintenance operations.

Still, a further object is to make an apparatus for dispensing granular material that is compact and simple to construct so as to facilitate the operations for the production, transportation and assembly of the apparatus, further reducing the space occupied, for example, in a production plant.

According to the invention, there is provided for an apparatus for regulating a flow of granular material and a granulating machine for producing granules as defined by the attached claims.

Owing to the present invention, it is possible to regulate the flow of granular material exiting from a machine for granulating powdered material, consequently adjusting, the granulation time and the particle size distribution of the obtained granules.

Owing to the apparatus according to the present invention, it is possible to dispense the flow of granular material, exiting from the granulating machine, continuously or discontinuously depending on the needs.

Furthermore, owing to the apparatus according to the present invention, it is possible to reduce maintenance and manual cleaning operations, decreasing machine downtime and production costs.

Still, owing to the apparatus according to the present invention, it is possible to reduce the overall dimensions, therefore facilitating construction, transportation and assembly operations.

The invention will be clearer and implemented with reference to the to the attached drawings which show some exemplifying and non-limiting embodiments thereof, wherein:

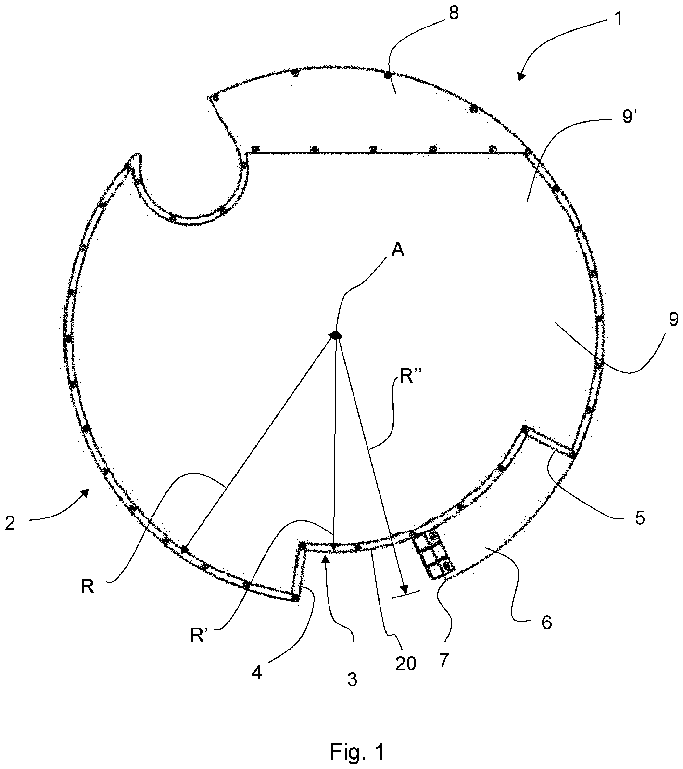

Figure 1 is a front view of a diaphragm apparatus for regulating a flow of granular material according to the present invention;

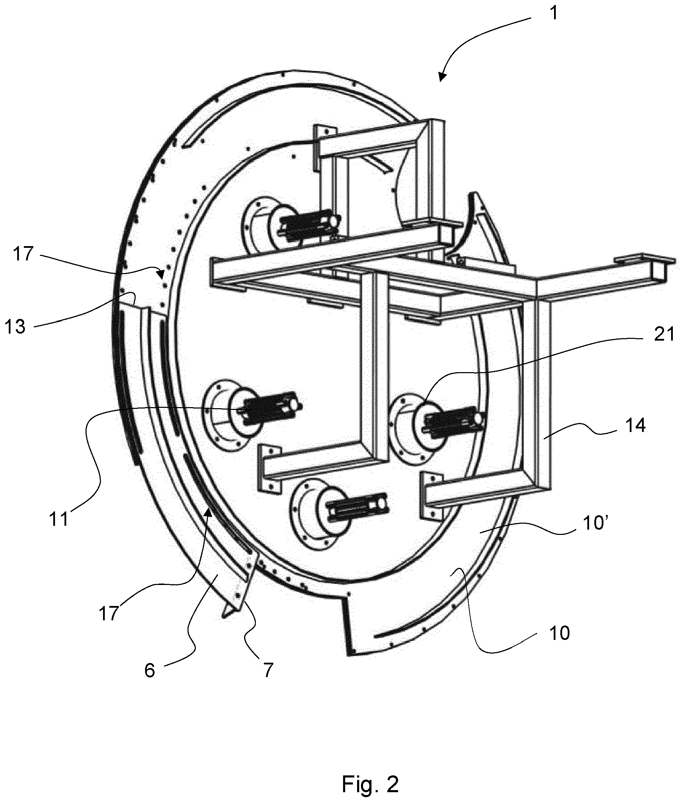

Figure 2 is a first perspective view of the diaphragm apparatus of figure 1;

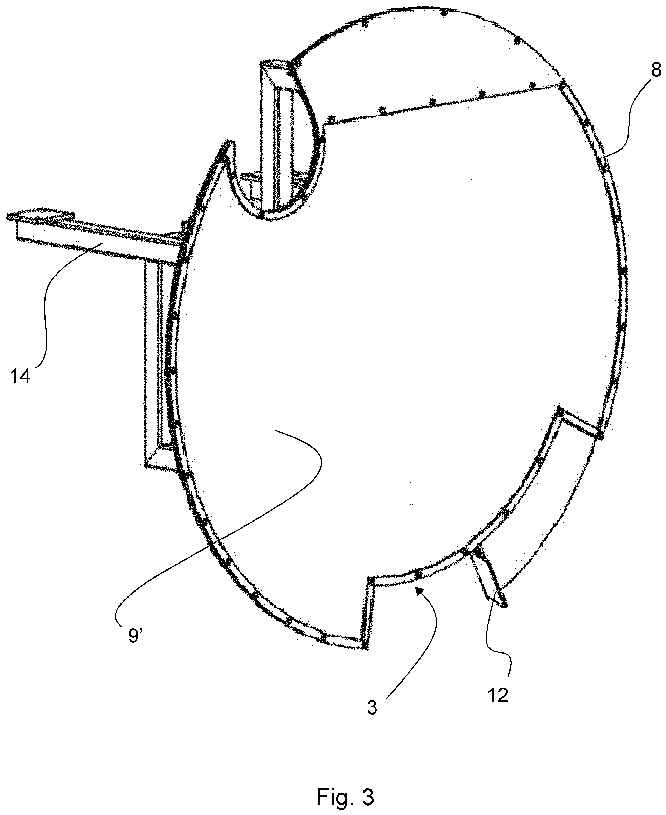

Figure 3 is a second perspective view of the diaphragm apparatus of figure 1;
Figure 4 is a perspective view which shows some components of the diaphragm apparatus of figure 1;

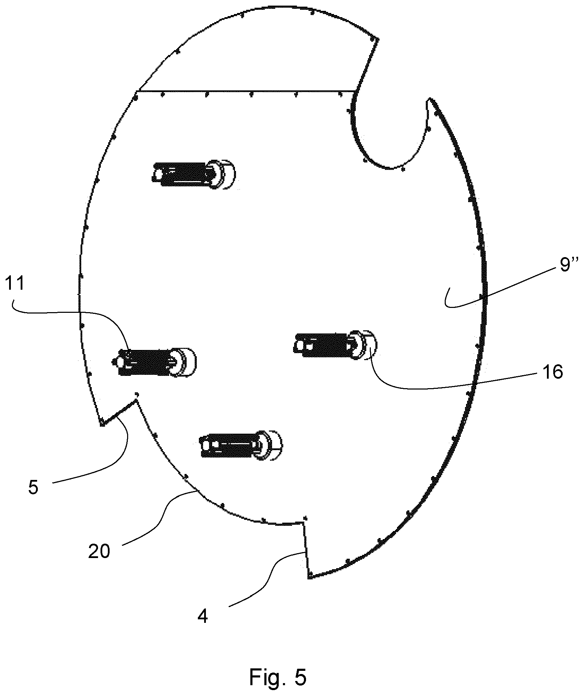

Figure 5 is a perspective view which shows some components of the diaphragm apparatus according to figure 1;

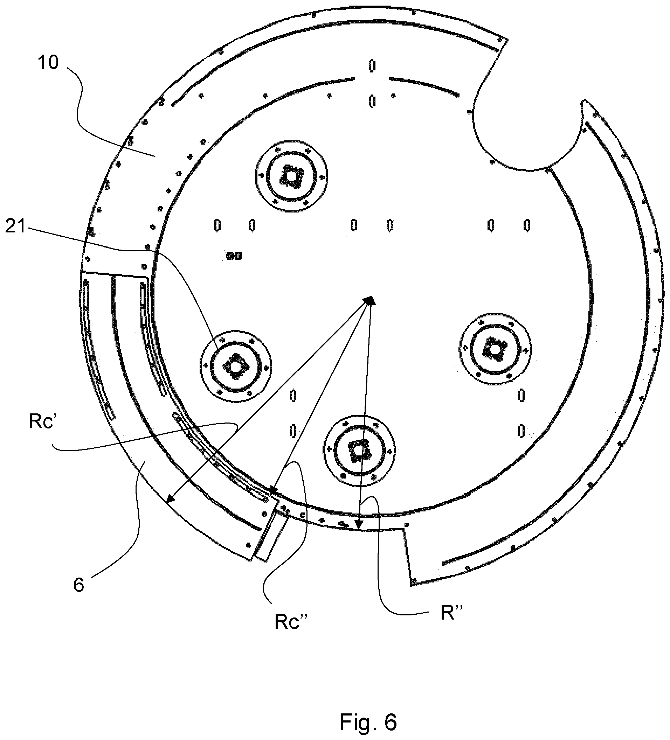

Figure 6 is a front view of a diaphragm apparatus according to the present invention;

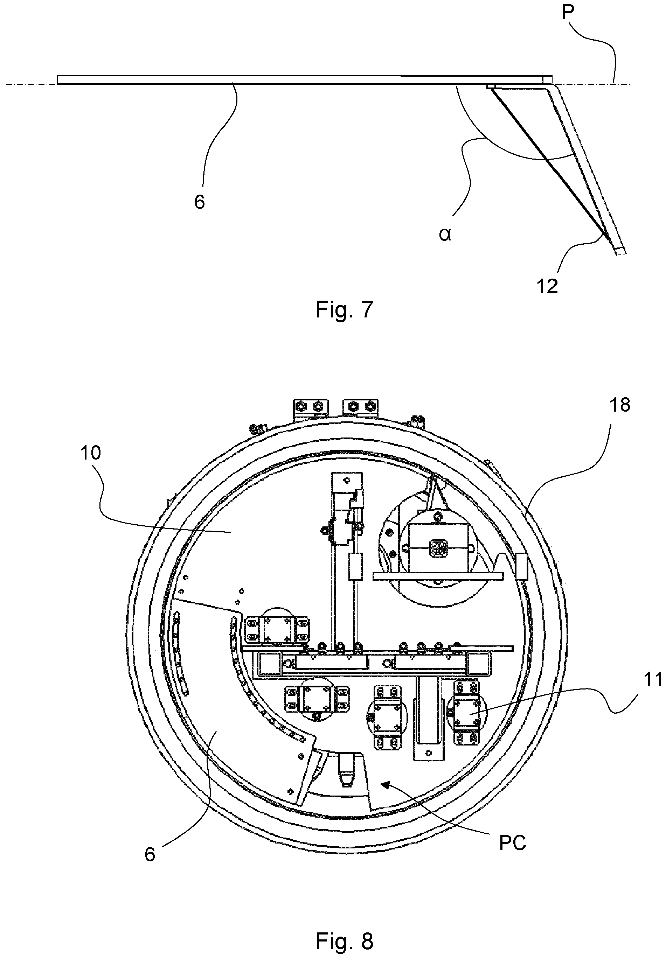

Figure 7 is a bottom view of a closing element according to the present invention;
Figure 8 is a front view of a rotatable drum provided with a diaphragm apparatus in which the closing element of figure 7 is fixed in a closed position;
Figure 9 is a perspective view of a granulating machine;
Figure 10 is a vertical elevation front view of the granulating machine of figure 9.

With reference to Figures, herein described is a diaphragm apparatus 1 for regulating a flow of granular material exiting from a granulating machine 19.

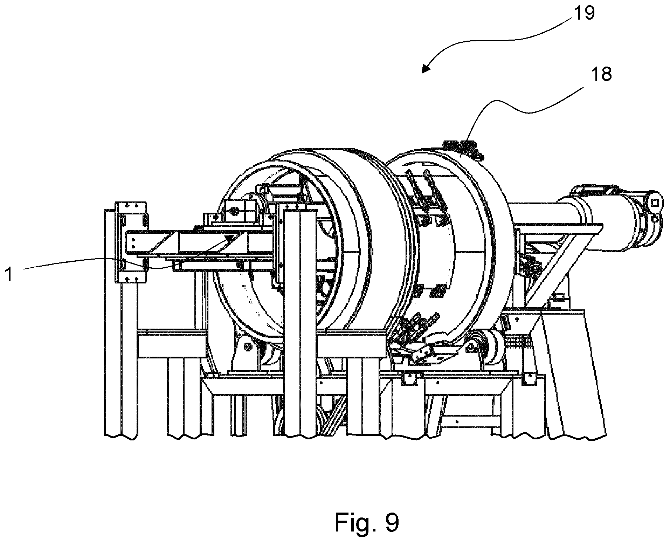

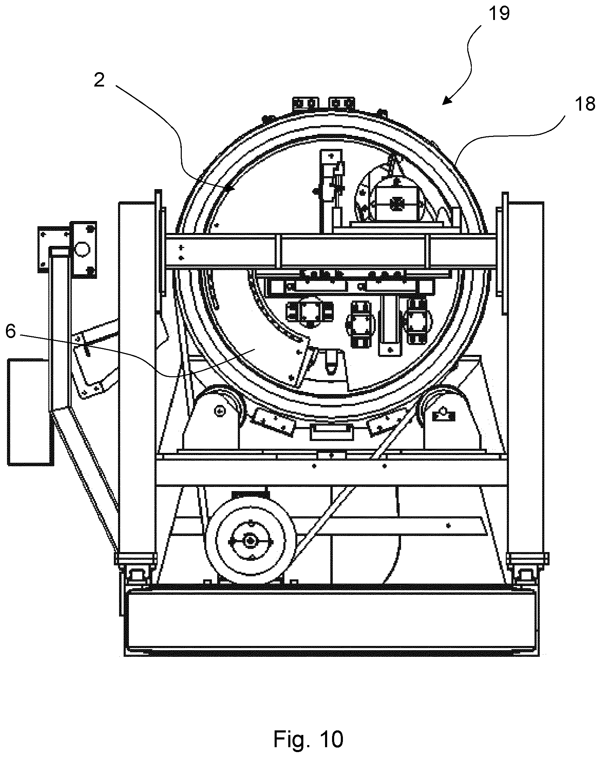

Figures 9 and 10 further show the granulating machine 19 for producing granular material by agglomeration of powdered material. The granulating machine 19 comprises a rotatable drum 18 with a horizontal axis A provided with an open discharge end for discharging the granular material, the open discharge end is provided with the diaphragm apparatus 1 described below.

The diaphragm apparatus 1 according to the invention is configured to be positioned at an open end of the rotatable drum 18 with a horizontal axis A of the granulating machine 19 for bounding the open end and for regulating a flow of granular material exiting from the granulating machine 19.

Furthermore, the diaphragm apparatus 1 is fixed - in use - with respect to a rotation of the rotatable drum 18. As a matter of fact, the rotatable drum 18 - in use - rotates around the horizontal axis A, while the diaphragm apparatus 1 is fixed with respect to the rotation of the rotatable drum 18, i.e. the diaphragm apparatus 1 is stationary.

The diaphragm apparatus 1 comprises a wall 2 having a substantially circular plan shape; in use, the wall 2 has the function of containing the material present inside the rotatable drum 18. On wall 2 there is obtained an opening 3 intended to discharge the granular material from the granulating machine 19. The opening 3 may circumferentially interrupt the material continuity of wall 2.

The wall 2 extends over two main dimensions with respect to a third dimension (the thickness). In particular, the wall 2 has a substantially circular plan shape with a circle radius R.

The opening 3 comprises a first edge 4 and a second edge 5. The first edge 4 and the second edge 5 are opposite to each other.

The opening 3 may extend in a circular crown arc between the first edge 4 and the second edge 5. In particular, the opening 3 may extend in a circular crown arc having a first major radius R' equal to the circle radius R, and a first minor radius R" smaller than the circle radius R.

At least one of the first edge 4 and the second edge 5 extends radially along a circle radius R of the substantially circular plan shape of the wall 2.

In particular, the first edge 4 and the second edge 5 may extend on the wall 2 along a direction substantially radial to the substantially circular plan shape. The first edge 4 and the second edge 5 may extend along a section whose size is equal to the difference of the first major radius R' and of the first minor radius R". In other words, the first edge 4 and the second edge 5 can be the radial sides of the opening 3.

The opening 3 further comprises a third edge 20 in the shape of a circumferential arc connected to the first edge 4 and to the second edge 5. In particular, the third edge 20 extends over a circumferential arc having as its radius the first minor radius R". Given that the opening 3 may circumferentially interrupt the material continuity of the wall 2, in the version shown, the opening 3 is delimited only by the first edge 4, by the second edge 5 and by the third edge 20.

The diaphragm apparatus 1 further comprises a closing element 6. The closing element 6 comprises an end 7. The closing element 6 may extend over a circular crown arc surface. In particular, the closing element 6 may extend over a circular crown arc surface having a second major radius Rc' which is larger than or equal to the first major radius R' and a second minor radius Rc" which is smaller than or equal to the first minor radius R".

The closing element 6 is configured to slide on wall 2 between a closed position PC and an open position PA. In the closed position PC, the end 7 is closer to the first edge 4. In the open position PA, the end 7 is closer to the second edge 5. The closing element 6 can slide between the closed position PC and the open position PA so as to adjust an area of the opening 3 for the discharge of the granular material.

In an embodiment, it is provided for that the closing element 6 does not entirely occupy the area of the opening 3 in the closed position PC. Therefore, in the closed position PC, the end 7 is not in contact with the first edge 4 so as to allow a small amount of granular material to pass through the rotatable drum 18.

In an alternative embodiment, it is provided for that the closing element 6 entirely occupies the area of opening 3 in the closed position PC. In such embodiment, the end 7 is arranged in contact with the first edge 4 in the closed position PC. In addition, the distance between end 7 and a further end 13 of the closing element 6, opposite to the first end 7, is greater than or equal to the distance comprised between the first side 4 and the second side 5 of the opening 2. In other words, the shape and size of the closing element 6 is such to close, in the closed position PC, the opening area 3 preventing the discharge of the granular material. When the end 7 of the closing element 6 is arranged in contact with the first edge 4, the flow of granular material exiting from the granulating machine 19 is stopped; when end 7 is arranged closer to the second edge 5, the flow of the exiting granular material is allowed.

The closing element 6 is removably couplable with the wall 2. In particular, the closing element 6 may be coupled using coupling means 17, such as for example threaded coupling means, quick coupling means, and the like. In particular, the coupling means 17 may comprise holes and/or slots.

The closing element 6 may be fixed in one or more intermediate positions comprised between the open position PA and the closed position PC. More particularly, both the wall 2 and the closing element 6 may comprise one or more holes and/or slots which allow the coupling of closing element 6 with wall 2 and the fixing of closing element 6 in one or more intermediate positions between the closed position PC and the open position PA. Therefore, the closing element 6 can be coupled to the wall 2 in order to easily and quickly adjust the area of the opening 3 for the discharge of the granular material; this allows to regulate the material output flow rate output and as a result the granulation time (that is the time within which the powdered material is granulated inside the rotatable drum 18). As a matter of fact, fixing the closing element 6 with the end 7 arranged in a position closer to the first edge 4, allows to reduce the material output flow rate, increasing the granulation time and particle size of the granular material produced; fixing the closing element 6 with the end 7 arranged closest to the second edge 5 allows to increase the material output flow rate, decreasing the granulation time and the particle size of the granular material produced. In other words, decreasing the area of the opening 3 increases the granulation time and the particle size of the granular material produced; increasing the area of the opening 3 decreases the granulation time and the particle size of the granular material produced.

The closing element 6 may be fixed and made to flow manually on the wall 2 between the closed position PC and the open position PA.

According to an embodiment, the closing element 6 may slide in an automated fashion on the wall 2 between a closed position PC and an open position PA.

The closing element 6 may comprise a deviating element 12. The deviating element is arranged closest to the end 7 and it extends transversely to the closing element 6. In use, the deviating element 12 protrudes from the closing element 6 towards the internal of the rotatable drum 18 and it facilitates the exit of the granular material. The deviating element 12 is configured to guide the granular material towards the outlet. The deviating element 12 extends transversely to the closing element 6 to induce, in use, the granulated material to pass through the opening 3; as a matter of fact, during the rotation of the rotatable drum 18, the granular material comes into contact with the deviating element 12 and slides thereon towards the external of the rotatable drum 18 through the opening 3. In particular, the deviating element 12 is tilted by an angle α with respect to a reference plane P on which the closing element 6 lies to facilitate the exit of the granular material through the opening 3. The angle α is comprised between 90 and 140 sexagesimal degrees.

The wall 2 comprises an elastic membrane element 9. The membrane element 9 comprises a first face 9' and a second face 9". The first face 9' faces, in use, towards the internal of the rotatable drum 18 so as to be in contact with the granular material. The membrane element 9 is deformable so as to limit the adhesion of the granulated material to the first face 9'. This allows to limit the accumulation of granular material on wall 2.

The wall 2 may comprise a frame 8. The peripheral edges of the membrane element 9 may be fixed to the frame 8. In particular, the peripheral edges of the membrane element 9 may be fixed to the frame 8 by means of a threaded coupling, snap-coupling, interference coupling or another type of coupling.

The frame 8 may be made of a rigid material, with properties that enable it to appropriately support the membrane element 9. For example, the frame 8 may be made of metal material.

The wall 2 further comprises a plate 10 facing the second face 9". The plate 10 comprises an outer face 10' facing in use toward the external of the rotatable drum 18. The plate 10 comprises a further face, opposite to the outer face 10', facing the second face 9". The plate 10 may be made of a rigid material, for example with a metal material.

The plate 10 is arranged to limit an axial deformation displacement of membrane element 9 along an axis substantially parallel to the horizontal axis A. In other words, the plate 10 prevents, in use, an axial displacement of the membrane element 9 directed towards the external of the rotatable drum 18 and, therefore, towards the plate 10.

The membrane element 9 may be fixed between the frame 8 and the plate 10. In particular, the peripheral edges of the membrane element 9 are fixed between the frame 8 and the plate 10.

The diaphragm apparatus 1 may comprise a support structure 14 fixed to the plate 10. The wall 2 may therefore be supported by support structure 14. In other words, the support structure 14 is fixed to the plate 10 so as to support the diaphragm apparatus 1. Furthermore, the support structure 14 is fixed to the granulating machine 19. The support structure 14 therefore allows the positioning of the diaphragm apparatus 1 at the open end of the rotatable drum 18.

The diaphragm apparatus 1 may comprise an urging device 11 configured to urge the membrane element 9 with urging transversal to the membrane element 9 to limit the adhesion of the granular material to the first face 9'. According to an embodiment, the diaphragm apparatus 1 may comprise a plurality of urging devices 11.

The urging action exerted by means of the urging device 11 deforms the elastic membrane element 9 preventing the granular material from adhering to the first face 9'. The diaphragm apparatus 1 is therefore kept clean given that the accumulation of granular material on the membrane element 9 is limited. Therefore, the urge exerted by the urging device 11 on the membrane element 9 allows to drastically reduce cleaning and maintenance operations.

According to an embodiment, the urging device 11 is arranged on the second face 9" of membrane element 9 so as to give transversal urging in the direction of the first face 9' which elastically deform the membrane element 9. In other words, in use, the urging device 11 is configured to deform the membrane element 9 with an urge facing towards the internal of the rotatable drum 18.

The urging device 11 comprises a pressing head 16 arranged to press the second face 9" in a limited area thereof and cause local deformation of the membrane element 9.

The urging device 11 may comprise pneumatic means; more particularly, it may comprise a pneumatic actuator having an end on which the pressing head 16 is fixed.

The urging device 11 may alternatively or additionally comprise an oil-hydraulic actuator and/or a linear actuator having an end on which a relative pressing head 16 is fixed.

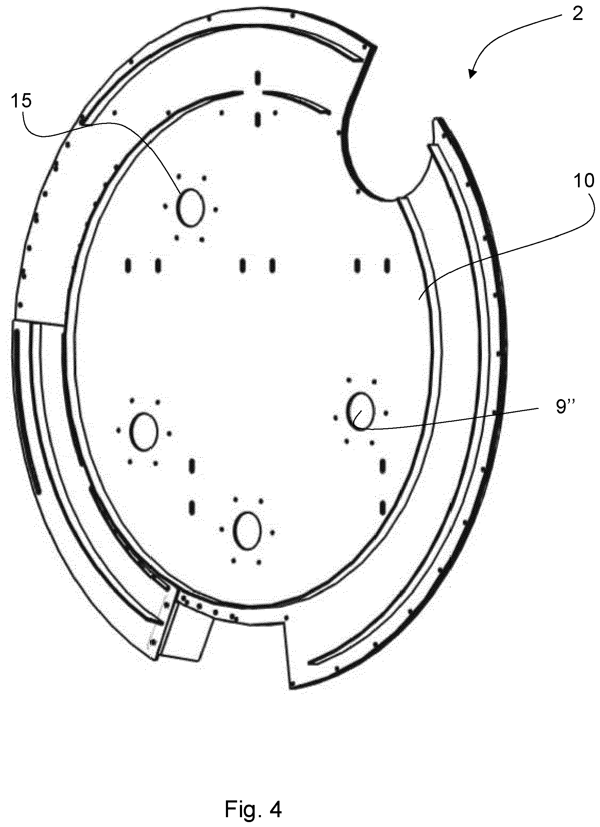

The urging device 11 may be fixed to the plate 10, in particular, by means of a support member 21 which surrounds the pressing head 16. The plate 10 may comprise a hole 15 (figure 4) configured to allow the pressing head 16 to pass through the plate 10 so that pressing head 16 of the urging device 11 reaches, during operation, the second face 9" so as to interact therewith and transmit the urge to the membrane element 9.

As shown in figure 4, the plate 10 may comprise a plurality of housing holes 15 for housing a plurality of urging devices 11.

In the light of the above, the diaphragm apparatus attains all intended objects by overcoming the drawbacks of the prior art.

Owing to the present invention, it is possible to control the granulation time easily and effectively. As a matter of fact, the possibility to adjust the opening area for the discharge of the granular material allows to regulate the flow and the flow rate of the material exiting from a granulating machine, therefore controlling the granulation time and the particle size distribution of the granules obtained. This is enabled by the closing element which may be fixed by changing its position between the closed position and the open position so as to control the opening area for discharging the granular material, increasing or decreasing, the material output flow rate and consequently changing the granulation time and particle size distribution depending on the production needs.

Furthermore, the apparatus according to the present invention allows to reduce maintenance and manual cleaning operations, reducing machine downtime and production costs. As a matter of fact, the membrane element and the urging devices which urge the membrane element, allow to limit the accumulation of the material on the wall. In other words, the urging devices clean the membrane element and, therefore, cleaning and maintenance operations are limited, with significant saving in terms of time and costs.

The apparatus according to the present invention also facilitates construction, transportation and assembly operations. As a matter of fact, thanks to the ease of manufacturing and compact shape of the diaphragm apparatus, construction, transportation and assembly operations are simplified, and the space occupied by the granulating machine during the granulating process is reduced.

## Claims

1. Diaphragm apparatus configured to be positioned at an open end of a rotatable drum (18) with a horizontal axis (A) of a granulating machine (19), said diaphragm apparatus (1) being fixed in use with respect to a rotation of said rotatable drum (18), said diaphragm apparatus (1) being suitable for bounding said open end and regulating a flow of granular material exiting from said granulating machine (19), said diaphragm apparatus (1) comprising a wall (2) having a substantially circular plan shape and an opening (3) intended for discharging said granular material from said granulating machine (19) being obtained on said wall (2), said opening (3) comprising a first edge (4) and second edge (5), said diaphragm apparatus (1) further comprising a closing element (6) configured to slide on said wall (2) between a closed position (PC), in which one end (7) of said closing element (6) is closer to said first edge (4), and an open position (PA) in which said end (7) is closer to said second edge (5), so as to adjust an area of said opening (3) for the discharge of said granular material.

2. Diaphragm apparatus (1) according to claim 1, wherein said closing element (6) is removably couplable with said wall (2) to be fixed in one or more intermediate positions comprised between said open position (PA) and said closed position (PC).

3. Diaphragm apparatus (1) according to any one of the preceding claims, wherein said opening (3) extends in a circular crown arc between said first edge (4) and said second edge (5), said first edge (4) and said second edge (5) being opposite to each other.

4. Diaphragm apparatus (1) according to any one of the preceding claims, wherein at least one between said first edge (4) and said second edge (5) extends radially along a circle radius (R) of said substantially circular plan shape.

5. Diaphragm apparatus (1) according to any one of the preceding claims, wherein said opening (3) further comprises a third edge (20) in the shape of a circumferential arc connected to said first edge (4) and to said second edge (5).

6. Diaphragm apparatus (1) according to any one of the preceding claims, wherein said closing element (6) extends on a circular crown arc surface.

7. Diaphragm apparatus (1) according to any one of the preceding claims, wherein said closing element (6) comprises a deviating element (12) arranged closer to said end (7), said deviating element (12) extending transversely to said closing element (6) to induce in use said granular material to traverse said opening (3).

8. Diaphragm apparatus (1) according to claim 7, wherein said deviating element (12) is tilted by an angle (α) with respect to a reference plane (P) on which said closing element (6) lies, said angle (α) being comprised between 90 and 140 sexagesimal degrees.

9. Diaphragm apparatus (1) according to any one of the preceding claims, wherein said wall (2) comprises an elastic membrane element (9) comprising a first face (9') and a second face (9"), said first face (9') facing, in use, towards the internal of said rotatable drum (18) so as to be in contact with said granular material, said membrane element (9) being deformable so as to limit the adhesion of said granular material on said first face (9').

10. Diaphragm apparatus (1) according to claim 9, wherein said wall (2) comprises a plate (10) which faces said second face (9"), said plate (10) being arranged to limit an axial deformation shift along an axis substantially parallel to said horizontal axis (A) of said membrane element (9).

11. Diaphragm apparatus (1) according to claim 9 or 10, comprising one or more urging devices (11) configured to urge said membrane element (9) with urging transversal to said membrane element (9) to limit the adhesion of said granular material to said first face (9').

12. Diaphragm apparatus (1) according to claim 11, wherein said one or more urging devices (11) comprise one or more pneumatic actuators.

13. Granulating machine for producing granular material by agglomeration of powdered material comprising a rotatable drum (18) with a horizontal axis (A) provided with an open discharge end for discharging said granular material, said open discharge end being provided with a diaphragm apparatus (1) according to one of the preceding claims.
